# FASCICULE DE BREVET EUROPEEN

(11) **EP 2 678 865 B1**
(45) Date de publication et mention de la délivrance du brevet: **07.01.2015**
(21) Numéro de dépôt: 12711935.2
(22) Date de dépôt: 24.02.2012
(51) Int. Cl.: G21C 17/003, G21D 1/00, F22B 37/00, G21C 17/007, G21C 17/01, G21C 17/017

(54) **DISPOSITIF D'INSPECTION D'UN GÉNÉRATEUR DE VAPEUR**
INSPEKTIONSEINRICHTUNG FÜR DAMPFERZEUGER
STEAM GENERATOR INSPECTION TOOL

(30) Priorité: 25.02.2011 FR 1151548
(43) Date de publication de la demande: 01.01.2014
(73) Titulaire: SRA Savac, 69516 Vaulx En Velin (FR)
(72) Inventeur: MANDIER, Jean-Paul, F-38300 Domarin (FR); DE OLIVEIRA, Jorge, F-26790 Rochegude (FR); FANJAS, Laurent, F-69140 Rillieux-la-pape (FR)
(74) Mandataire: Verriest, Philippe
(86) Numéro de dépôt international: PCT/FR2012/050389
(87) Numéro de publication internationale: WO 2012/114049

(56) Documents cités:
- EP-A1- 1 803 996
- FR-A1- 2 396 293
- FR-A1- 2 630 934
- FR-A1- 2 914 394
- FR-A1- 2 928 024
- GB-A- 2 452 933
- JP-A- 52 045 165
- US-A1- 2003 217 422

## Description

La présente invention concerne un dispositif d'inspection d'un générateur de vapeur.

Les générateurs de vapeur sont notamment utilisés dans les centrales nucléaires où ils forment des échangeurs de chaleur comportant deux circuits distincts, respectivement un circuit primaire dans lequel circule de l'eau chaude à très haute pression provenant du réacteur, et un circuit secondaire dans lequel l'eau est portée à ébullition. La vapeur ainsi formée s'échappe alors du générateur de vapeur et est utilisée pour faire tourner des turbines couplées à un alternateur.

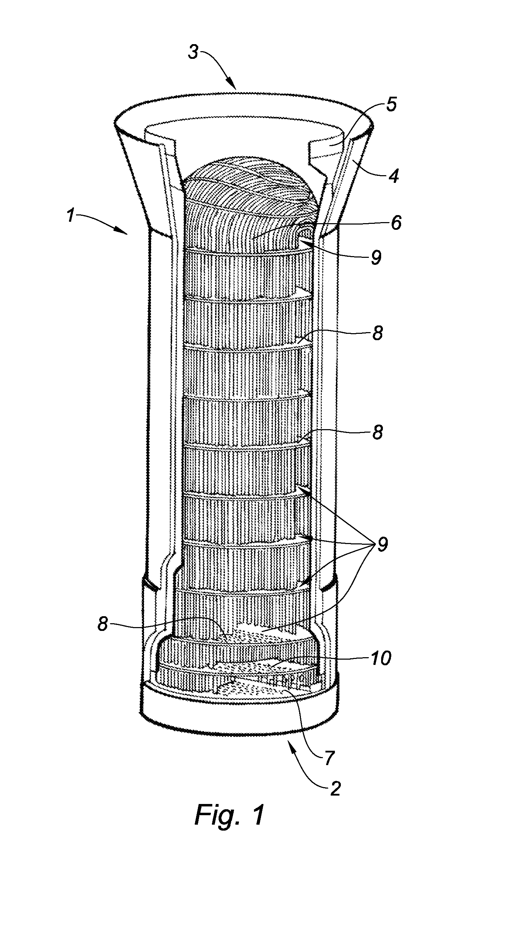

La figure 1 représente une partie d'un générateur de vapeur 1 se présentant sous la forme d'une enceinte cylindrique comportant une partie basse 2 destinée au raccordement du circuit primaire, et une partie haute 3 destinée à la sortie de la vapeur et au séchage de celle-ci.

Le générateur de vapeur 1 comporte une enveloppe externe appelée virole 4 et une enveloppe interne appelée jupe enveloppe 5. Des tubes d'écoulement métalliques 6 sont disposés dans le volume délimité par la jupe enveloppe 5. Ceux-ci présentent une forme générale de U inversé et sont destinés à la circulation de l'eau du circuit primaire. Ils échangent alors de la chaleur avec l'eau du circuit secondaire se trouvant à l'intérieur de la jupe enveloppe 5. Ces tubes 6 sont montés, en partie basse 2, sur une plaque support appelée plaque tubulaire 7 et traversent des plaques entretoises 8 espacées régulièrement les unes des autres et parallèles entre elles, ces dernières permettant d'éviter tout mouvement des tubes 6 les uns par rapport aux autres. Chaque plaque entretoise 8 forme avec les tubes 6 un passage appelé rû d'eau 9, s'étendant diamétralement par rapport à la plaque entretoise 8.

Les plaques entretoises 8 comportent, pour le passage des tubes 6, des ouvertures 10 assurant d'une part des zones de contact avec un tube pour assurer la tenue de celui-ci et délimitant d'autre part des zones de passage pour l'eau ou la vapeur du circuit secondaire, suivant la position de la plaque entretoise correspondante 8. Ces ouvertures sont généralement en forme de croix ou quadrifoliées de sorte que chaque ouverture délimite avec le tube correspondant quatre lobes régulièrement réparties autour du tube, ces lobes formant les zones de passage précitées, et étant généralement appelés « passages foliés ».

Lors du fonctionnement d'un générateur vapeur, de l'eau présente dans l'enceinte du générateur est portée à haute température et à haute pression dans le but de générer de la vapeur. Les tubes et les autres parties métalliques du séparateur à cyclones sont alors soumis à des conditions extrêmes qui occasionnent une corrosion inévitable.

Sans intervention, des dépôts liés à cette corrosion s'accumulent sur la plaque tubulaire 7 et les plaques entretoises 8, et peuvent notamment colmater, au moins partiellement, les zones de passage précitées, ce qui nuit au rendement du générateur de vapeur, mais également à la sûreté du fonctionnement de ce dernier si le taux de colmatage atteint une valeur élevée.

En effet, un taux de colmatage élevé peut conduire à l'apparition de vibrations excessives des tubes dans certaines zones du générateur de vapeur, vibrations qui peuvent conduire au développement rapide de fissures des tubes et donc à l'apparition de fuites entre les circuits primaire et secondaire.

Un tel taux de colmatage élevé peut également induire des phénomènes d'oscillation du niveau d'eau dans le circuit secondaire, et des efforts mécaniques importants sur les plaques entretoises, les tubes d'écoulement et l'enveloppe interne.

Il est donc utile de pouvoir accéder aux zones de liaison entre les tubes 6 et les plaques entretoises 8 de manière à pouvoir y placer un appareillage, par exemple une sonde vidéo permettant d'effectuer une inspection de ces zones.

Afin de réaliser l'inspection de l'enceinte d'un générateur de vapeur, et plus particulièrement d'au moins une partie des zones de passage précitées, il est connu d'utiliser un système d'inspection comprenant une sonde vidéo et un dispositif d'insertion de cette sonde tel que décrits dans le document FR 2 914 394.

Un tel système autorise le contrôle et le dimensionnement du colmatage des zones de passage de la plaque entretoise supérieure, mais également des plaques entretoises intermédiaires.

Cependant, un tel système d'inspection permet uniquement la visualisation du colmatage des zones de passage, par le dessus, mais ne permet pas l'obtention d'information sur la forme du colmatage en entrée de plaque, c'est-à-dire dans le sens de circulation du fluide dans le circuit secondaire, ce qui peut conduire à une mauvaise estimation du taux de colmatage.

La présente invention vise à remédier à cet inconvénient.

Le problème technique à la base de l'invention consiste donc à fournir un dispositif d'inspection d'un générateur de vapeur qui soit de structure simple et économique, tout en permettant une inspection efficace, aisée et rapide du générateur de vapeur.

A cet effet, la présente invention concerne un dispositif d'inspection d'un générateur de vapeur comprenant une enceinte étanche logeant une pluralité de tubes d'écoulement d'un premier fluide et au moins une plaque entretoise destinée au maintien des tubes et présentant un ensemble d'ouvertures de passage de tubes, l'enceinte étanche étant destinée à accueillir un second fluide, le dispositif d'inspection comportant :
- une première sonde vidéo flexible et de forme allongée, destinée à être insérée dans l'enceinte du générateur de vapeur par une ouverture de celle-ci et conformée pour être déplaçable à travers un orifice de passage de fluide délimité par une plaque entretoise et un tube d'écoulement, la première sonde vidéo comprenant au moins un élément ferromagnétique,
- une deuxième sonde flexible et de forme allongée, destinée à être insérée, par une ouverture de l'enceinte du générateur de vapeur, dans un tube d'écoulement, la deuxième sonde comprenant au moins un aimant permanent agencé pour coopérer avec l'au moins un élément ferromagnétique de la première sonde de façon à réaliser un entraînement de la première sonde, le long de la surface extérieure d'un tube d'écoulement, par la deuxième sonde, lorsque la deuxième sonde est insérée dans ledit tube d'écoulement et déplacée dans ce dernier, et lorsque la première sonde est insérée dans l'enceinte du générateur de vapeur et disposée à proximité de la surface extérieure du tube d'écoulement dans lequel est insérée la deuxième sonde.

De par l'accouplement magnétique du ou des éléments ferromagnétiques de la première sonde avec le ou les aimants permanents de la deuxième sonde, la première sonde peut être maintenue, guidée et entraînée de bas en haut sur sensiblement toute la partie droite d'un tube d'écoulement, permettant d'accéder ainsi à au moins un orifice de passage de fluide (appelé passage folié) délimité en partie par ledit tube d'écoulement, au niveau de chaque plaque entretoise.

En outre, le fait que la première sonde puisse être entraînée de bas en haut par la deuxième sonde, permet de disposer, en entrée de chaque plaque entretoise, d'images télévisuelles d'au moins un passage folié, et donc de la forme de l'encrassement et du dimensionnement de la section colmatée de ce dernier.

De plus, l'entraînement de la première sonde le long de la surface extérieure d'un tube d'écoulement permet de visualiser l'encrassement de ce dernier.

Par conséquent, en réalisant des inspections successives le long de plusieurs tubes d'écoulement présélectionnés, il est possible d'obtenir une meilleure estimation du taux de colmatage, et donc d'éviter les inconvénients des dispositifs de l'art antérieur.

De préférence, la deuxième sonde comporte, à proximité de son extrémité distale, un aimant permanent présentant au moins une face plane s'étendant selon un angle inférieur à 45° par rapport à la direction générale de la deuxième sonde, et de préférence sensiblement parallèlement à la direction générale de la deuxième sonde, et des moyens d'entraînement en rotation agencés pour entraîner en rotation ledit aimant permanent autour d'un axe sensiblement parallèle à la direction générale de la deuxième sonde. Ces dispositions permettent de réaligner la première sonde au droit d'un passage folié de référence en cas de dérive verticale lors de la montée de la première sonde, ou à orienter la première sonde au droit des passages foliés adjacents au passage folié de référence afin de pouvoir les visualiser.

De préférence, l'aimant permanent présentant au moins une face plane est parallélépipédique, et par exemple de section carrée.

Avantageusement, l'aimant permanent présentant au moins une face plane comporte un axe longitudinal s'étendant sensiblement selon la direction générale de la deuxième sonde, et les moyens d'entraînement en rotation sont agencés pour entraîner en rotation ledit aimant permanent autour de son axe longitudinal.

Les moyens d'entraînement en rotation comportent par exemple un moteur électrique dont l'arbre de sortie est couplé en rotation avec l'aimant permanent présentant au moins une face plane. L'arbre de sortie peut être couplé directement en rotation avec ledit aimant permanent, ou être couplé en rotation avec un organe de support, tel qu'un flasque, solidaire en rotation dudit aimant permanent.

De façon préférentielle, la deuxième sonde comporte une pluralité d'aimants permanents décalés longitudinalement les uns par rapport aux autres, et la première sonde comporte une pluralité d'éléments ferromagnétiques décalés longitudinalement les uns par rapport aux autres, chaque élément ferromagnétique étant agencé pour coopérer par accouplement magnétique avec l'un des aimants permanents de la deuxième sonde. Ces dispositions permettent d'assurer un guidage et un entraînement optimisés de la première sonde par la deuxième sonde.

Selon un mode de réalisation de l'invention, les aimants permanents distincts de l'aimant permanent présentant au moins une face plane sont sensiblement cylindriques et présentent de préférence une section circulaire.

Préférentiellement, la deuxième sonde comporte une pluralité d'entretoises disposées chacune entre deux aimants permanents adjacents distincts de l'aimant permanent présentant au moins une face plane.

De préférence, le ou chaque élément ferromagnétique comporte une bague ferromagnétique montée autour de la surface extérieure de la première sonde.

Selon un mode de réalisation de l'invention, la première sonde comporte des moyens d'éclairage agencés pour éclairer une zone disposée à proximité de l'extrémité distale de la première sonde.

De façon avantageuse, les moyens d'éclairage comportent au mois une première fibre optique comprenant une première extrémité reliée à une source de lumière et une deuxième extrémité débouchant à l'extrémité distale de la première sonde.

Préférentiellement, la première sonde est un fibroscope.

Selon un mode de réalisation de l'invention, la première sonde comporte des moyens de propulsion d'air agencés pour propulser de l'air à proximité ou au niveau de l'extrémité distale de la première sonde. De tels moyens de propulsion d'air permettent notamment de nettoyer l'objectif vidéo de la première sonde. Les moyens de propulsion d'air comportent par exemple un capillaire s'étendant sensiblement sur toute la longueur de la première sonde et relié à une source d'air comprimé.

Avantageusement, le dispositif d'inspection comporte des premiers moyens d'insertion et de positionnement de la première sonde à l'intérieur de l'enceinte du générateur de vapeur, comprenant :
- un rail de support destiné à être inséré, par une ouverture de l'enceinte du générateur de vapeur, selon une direction d'insertion sensiblement horizontale entre deux rangées de tubes d'écoulement,
- des moyens de guidage et de maintien destinés à être fixés au niveau de ladite ouverture de l'enceinte et agencés pour guider et maintenir le rail de support suivant la direction d'insertion,
- un chariot monté mobile sur le rail de support et muni d'une tête orientable,
- un tuyau flexible comportant une première portion d'extrémité montée sur la tête orientable du chariot, et une deuxième portion d'extrémité destinée à faire saillie à l'extérieur du générateur de vapeur, la première sonde vidéo étant destinée à être insérée et déplacée à l'intérieur du tuyau flexible,
- des moyens de balayage agencés pour déplacer la tête orientable du chariot selon au moins une première direction transversale à la direction d'insertion, et
- des moyens de déplacement en translation agencés pour déplacer en translation le chariot le long du rail de support.

Les moyens de balayage sont par exemple agencés pour entraîner en rotation la tête orientable de manière à permettre son oscillation autour d'un point de pivot.

Avantageusement, le dispositif d'inspection comprend des seconds moyens d'insertion et de positionnement de la seconde sonde à l'intérieur de l'enceinte du générateur de vapeur, comportant :
- des premier et deuxième rails de support destinés à être fixés sur la face inférieure de la plaque support de telle sorte qu'ils s'étendent sensiblement parallèlement entre eux,
- un troisième rail de support monté déplaçable en translation sur les premier et deuxième rails de support parallèlement à leur direction d'extension
- un chariot monté mobile sur le troisième rail de support,
- une gaine de guidage comportant une première portion d'extrémité montée sur le chariot et une deuxième portion d'extrémité destinée à faire saillie à l'extérieur du générateur de vapeur, la deuxième sonde 16 étant destinée à être insérée et déplacée à l'intérieur de la gaine de guidage, et
- des premiers et secondes moyens de déplacement agencés pour déplacer le troisième rail de support et le chariot monté sur ce dernier de manière à positionner la première portion d'extrémité de la gaine de guidage en regard d'un passage d'écoulement de fluide ménagé dans la plaque support et dans lequel débouche un tube d'écoulement.

De préférence, le dispositif d'inspection comprend des moyens d'entraînement de la deuxième sonde agencés pour déplacer la deuxième sonde à l'intérieur d'un tube d'écoulement.

Les moyens d'entraînement de la deuxième sonde comporte par exemple au moins deux galets, d'axes sensiblement parallèles, disposés sensiblement en regard l'un de l'autre et espacés de manière à définir un passage de sonde, chaque galet venant en appui contre la sonde et au moins l'un des galets étant motorisé. Selon un mode de réalisation de l'invention, les moyens d'entraînement sont montés sur un enrouleur sur lequel est destinée à être enroulée la deuxième sonde.

De toute façon l'invention sera bien comprise à l'aide de la description qui suit en référence au dessin schématique annexé représentant, à titre d'exemple non limitatif, une forme d'exécution de ce dispositif d'inspection.
Figure 1 est une vue en coupe partielle d'un générateur de vapeur classique.
Figure 2 est une vue partielle en perspective du dispositif d'inspection selon l'invention.
Figure 3 est une vue partielle de dessus, à l'échelle agrandie, du dispositif d'inspection de la figure 2.
Figures 4 et 5 sont des vues partielle en perspective du dispositif d'inspection de la figure 2 dans deux positions de fonctionnement différentes.

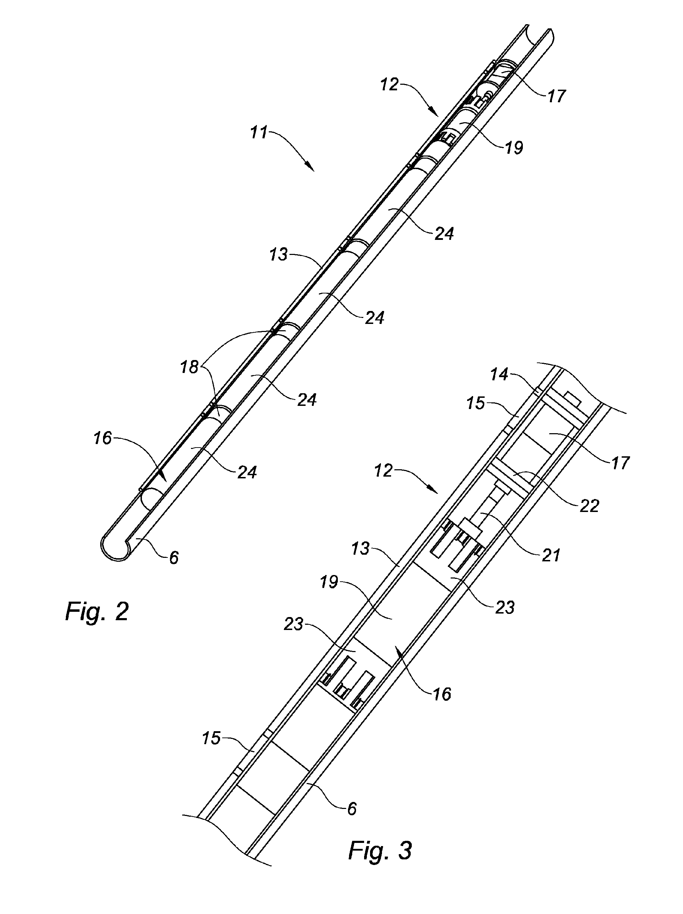

Les figures 2 à 5 représentent un dispositif d'inspection 11 d'un générateur de vapeur 1 d'une centrale nucléaire.

Le dispositif d'inspection 11 comporte une première sonde vidéo 12 flexible et de forme allongée. La première sonde vidéo 12 est avantageusement un fibroscope, et présente par exemple un diamètre d'environ 2 mm. La première sonde vidéo 12 comprend une gaine externe 13 à l'extrémité distale de laquelle est montée une tête 14 équipée d'un objectif vidéo (non représenté sur les figure). La première sonde vidéo 12 comprend en outre des moyens d'éclairage (non représentés sur les figure) agencés pour éclairer une zone disposée à proximité de l'extrémité distale de la première sonde.

Les moyens d'éclairage comportent avantageusement au moins une fibre optique ou un faisceau de fibres optiques s'étendant à l'intérieur de la gaine externe 13 sensiblement sur toute la longueur de cette dernière. La ou chaque fibre optique comporte une première extrémité reliée à une source de lumière (non représentée sur les figures) et une deuxième extrémité débouchant à l'extrémité distale de la première sonde.

La deuxième extrémité de la ou de chaque fibre optique est de préférence orientée afin de faire converger la lumière issue de la source de lumière dans une zone correspondant sensiblement à la zone de détection de l'objectif.

Selon une variante de réalisation de l'invention, la deuxième extrémité de la ou de chaque fibre optique pourrait être reliée à un dispositif de diffusion de lumière.

La première sonde vidéo 12 comprend en outre une deuxième fibre optique agencée pour transporter l'image fournie par l'objectif jusqu'à un dispositif d'affichage afin de permettre à un utilisateur d'observer l'image fournie par l'objectif.

La première sonde comporte également une pluralité d'éléments ferromagnétiques 15 décalés longitudinalement les uns par rapport aux autres d'une distance prédéterminée. Chaque élément ferromagnétique est avantageusement constitué par une bague ferromagnétique montée autour de la gaine externe 13 de la première sonde 12.

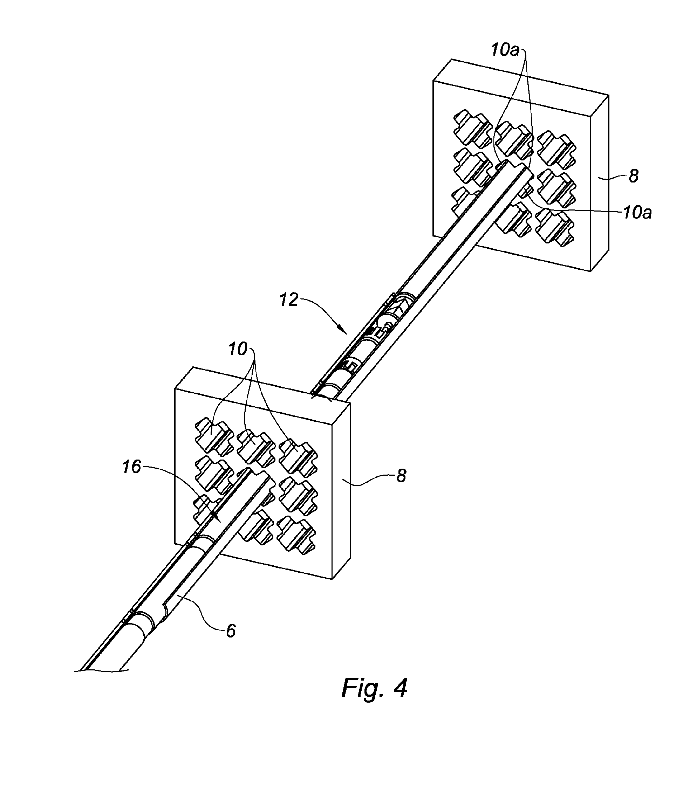

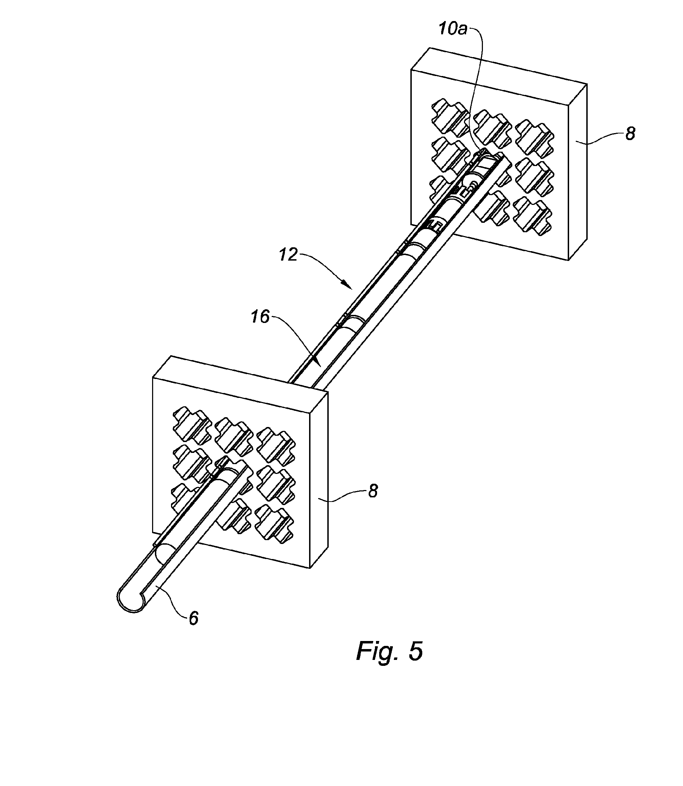

La première sonde vidéo 12 est destinée à être insérée dans l'enceinte du générateur de vapeur 1 par une ouverture de celle-ci, telle qu'un trou de poing ou d'oeil, et est conformée pour être déplaçable à travers un orifice de passage de fluide 10a délimité par une plaque entretoise 8 et un tube d'écoulement 6, comme cela est montré sur les figures 4 et 5.

Le dispositif d'inspection 11 comporte également une deuxième sonde 16 flexible et de forme allongée. La deuxième sonde 16 comprend d'une part une gaine externe (non représentée sur les figures), et d'autre part une pluralité d'aimants permanents logés dans la gaine externe et décalés longitudinalement les uns par rapport aux autres d'une distance prédéterminée.

La deuxième sonde 16 comprend plus particulièrement un aimant permanent 17 d'un premier type disposé à proximité de l'extrémité distale de la deuxième sonde, et une pluralité d'aimants permanents 18 d'un second type.

L'aimant permanent 17 du premier type est de préférence parallélépipédique, et avantageusement de section carrée. L'aimant permanent 17 du premier type est disposé à l'intérieur de la gaine externe de telle sorte que ses quatre faces latérales s'étendent sensiblement parallèlement à la direction générale de la deuxième sonde 16.

Les aimants permanents 18 du second type sont sensiblement cylindriques et présentent une section circulaire. L'axe longitudinale de chaque aimant permanent 18 du second type s'étend sensiblement selon la direction générale de la deuxième sonde 16.

La deuxième sonde 16 comprend en outre des moyens d'entraînement en rotation agencés pour entraîner en rotation l'aimant permanent 17 du premier type autour de son axe longitudinal. Les moyens d'entraînement en rotation comportent par exemple un moteur électrique 19 dont l'arbre de sortie 21 est couplé en rotation avec un flasque de support 22 solidaire en rotation de l'aimant permanent 17 du premier type.

La deuxième sonde 16 comprend également des moyens de centrage 23 agencé de manière à centrer l'arbre de sortie 21 du moteur 19 sur l'axe longitudinal de l'aimant permanent 17.

La deuxième sonde 16 comporte de plus une pluralité d'entretoises 24 sensiblement identiques disposées chacune entre deux aimants permanents adjacents 18 du second type.

La deuxième sonde 16 est destinée à être insérée, par une ouverture de l'enceinte du générateur de vapeur, telle que l'entrée ou la sortie d'eau du circuit primaire, dans un tube d'écoulement 6.

Chaque aimant permanent 17, 18 de la deuxième sonde 16 est agencé pour coopérer par accouplement magnétique avec l'un des éléments ferromagnétiques 15 de la première sonde 12 de façon à réaliser un entraînement de la première sonde, le long de la surface extérieure d'un tube d'écoulement, par la deuxième sonde 16, lorsque la deuxième sonde est insérée dans ledit tube d'écoulement et déplacée dans ce dernier, et lorsque la première sonde 12 est insérée dans l'enceinte du générateur de vapeur et disposée à proximité de la surface extérieure du tube d'écoulement dans lequel est insérée la deuxième sonde.

Le dispositif d'inspection 11 comprend en outre des premiers moyens d'insertion et de positionnement (non représentés sur les figures) de la première sonde 12 à l'intérieur de l'enceinte du générateur de vapeur.

Les premiers moyens d'insertion et de positionnement comportent de préférence :
- un rail de support destiné à être inséré, par une ouverture de l'enceinte du générateur de vapeur, telle qu'un trou de poing ou d'oeil, selon une direction d'insertion sensiblement horizontale entre deux rangées de tubes d'écoulement 6,
- des moyens de guidage et de maintien destinés à être fixés au niveau de ladite ouverture de l'enceinte et agencés pour guider et maintenir le rail de support suivant la direction d'insertion,
- un chariot monté mobile sur le rail de support et muni d'une tête orientable,
- un tuyau flexible comportant une première portion d'extrémité montée sur la tête orientable du chariot, et une deuxième portion d'extrémité destinée à faire saillie à l'extérieur du générateur de vapeur, la première sonde vidéo 12 étant destinée à être insérée et déplacée à l'intérieur du tuyau flexible,
- des moyens de balayage agencés pour déplacer la tête orientable du chariot selon au moins une première direction transversale à la direction d'insertion, et
- des moyens de déplacement en translation agencés pour déplacer en translation le chariot le long du rail de support.

Les premiers moyens d'insertion et de positionnement sont agencés pour permettre à un opérateur de positionner aisément l'extrémité distale de la première sonde 12 à proximité de la surface extérieure d'un tube d'écoulement 6, et de préférence sur une génératrice de la surface extérieure de ce dernier, et ce d'une part en déplaçant le chariot le long du rail de support et orientant la tête orientable de manière à positionner l'extrémité distale du tuyau flexible à proximité du tube d'enroulement souhaité, et d'autre part en déplaçant la première sonde 12 à l'intérieur du tuyau flexible.

Selon un mode de réalisation de l'invention, les moyens de balayage sont agencés pour entraîner en rotation la tête orientable de manière à permettre son oscillation autour d'un point de pivot.

Le dispositif d'inspection 11 comprend avantageusement des moyens d'entraînement (non représentés sur les figures) de la première sonde 12 agencés pour déplacer la première sonde à l'intérieur du tuyau flexible.

Le dispositif d'inspection 11 comprend en outre des seconds moyens d'insertion et de positionnement (non représentés sur les figures) de la deuxième sonde 16 à l'intérieur de l'enceinte du générateur de vapeur.

Les seconds moyens d'insertion et de positionnement comportent de préférence :
- des premier et deuxième rails de support destinés à être fixés sur la face inférieure de la plaque support de telle sorte qu'ils s'étendent sensiblement parallèlement entre eux,
- un troisième rail de support monté déplaçable en translation sur les premier et deuxième rails de support parallèlement à leur direction d'extension
- un chariot monté mobile sur le troisième rail de support,
- une gaine de guidage comportant une première portion d'extrémité montée sur le chariot et une deuxième portion d'extrémité destinée à faire saillie à l'extérieur du générateur de vapeur, la deuxième sonde 16 étant destinée à être insérée et déplacée à l'intérieur de la gaine de guidage, et
- des premiers et secondes moyens de déplacement agencés pour déplacer le troisième rail de support et le chariot monté sur ce dernier de manière à positionner la première portion d'extrémité de la gaine de guidage en regard d'un passage d'écoulement de fluide ménagé dans la plaque support et dans lequel débouche un tube d'écoulement.

Le dispositif d'inspection 11 comprend avantageusement des moyens d'entraînement (non représentés sur les figures) de la deuxième sonde 16 agencés pour déplacer la deuxième sonde à l'intérieur d'un tube d'écoulement.

Les moyens d'entraînement de la deuxième sonde comportent par exemple au moins deux galets, d'axes sensiblement parallèles, disposés sensiblement en regard l'un de l'autre et espacés de manière à définir un passage de sonde, chaque galet venant en appui contre la sonde et au moins l'un des galets étant motorisé. Selon un mode de réalisation de l'invention, les moyens d'entraînement de la deuxième sonde sont montés sur un enrouleur sur lequel est destinée à être enroulée la deuxième sonde.

Le procédé d'inspection du générateur de vapeur 1 à l'aide du dispositif d'inspection 11 selon l'invention va maintenant être décrit.

Le procédé d'inspection comprend les étapes suivantes consistant à:
a) insérer la deuxième sonde 16 dans l'entrée ou la sortie d'eau du circuit primaire du générateur de vapeur,
b) insérer l'extrémité distale de la deuxième sonde 16 dans un passage d'écoulement de fluide ménagé dans la plaque support 7 dans lequel débouche un tube d'écoulement 6 présélectionné,
c) déplacer la deuxième sonde 16 dans ledit tube d'écoulement 6 jusqu'à ce que son extrémité distale se trouve à un niveau prédéterminé correspondant sensiblement à celui d'un trou de poing ou d'oeil ménagé dans l'enceinte du générateur de vapeur,
d) insérer la première sonde 12 dans le trou de poing ou d'oeil précité,
e) positionner l'extrémité distale de la première sonde 12 à proximité de la surface extérieure dudit tube d'écoulement 6,
f) faire coopérer l'aimant permanent 17 de la deuxième sonde 16 avec l'élément ferromagnétique 15 monté à proximité de l'extrémité distale de la première sonde 12,
g) déplacer la deuxième sonde 16 dans le tube d'écoulement 6 de façon entraîner la première sonde 12 le long de la surface extérieure du tube d'écoulement 6 (voir les figures 4 et 5) de façon à visualiser au moins un passage folié délimité en partie par ledit tube d'écoulement, et ce au niveau de chaque plaque entretoise 8.

Selon une variante de mise en oeuvre du procédé, ce dernier comporte une étape consistant à entraîner en rotation l'aimant permanent du premier type de manière à entraîner en rotation l'extrémité distale de la première sonde 12 autour du tube d'écoulement 6 afin soit d'aligner l'extrémité distale de cette dernière en regard du passage folié à analyser, soit de visualiser les différents passages foliés délimités par chaque plaque entretoise 8 et le tube d'écoulement 6. Une telle étape est avantageusement réalisée lorsque la tête de la première sonde 12 est situé à proximité d'une plaque entretoise 8, par exemple à environ 10 cm ou moins de celle-ci.

Avantageusement, les étapes a) à c) sont réalisées à l'aide des seconds moyens d'insertion et de positionnement, et les étapes d) et e) sont réalisées à l'aide des premiers moyens d'insertion et de positionnement.

Selon une variante de mise en oeuvre du procédé, ce dernier comporte une étape préalable à l'étape g) consistant à entraîner en rotation l'aimant permanent 17 de manière à entraîner en rotation l'extrémité distale de la première sonde 12 autour du tube d'écoulement 6, afin de s'assurer d'un parfait accouplement magnétique entre l'aimant permanent 17 avec l'élément ferromagnétique 15 monté à proximité de l'extrémité distale de la première sonde 12. Un tel accouplement est vérifié au travers du mouvement de l'image fournie la première sonde 12.

## Revendications

1. Dispositif d'inspection (11) d'un générateur de vapeur (1) comprenant une enceinte étanche (3) logeant une pluralité de tubes d'écoulement (6) d'un premier fluide et au moins une plaque entretoise (8) destinée au maintien des tubes et présentant un ensemble d'ouvertures (10) de passage de tubes, l'enceinte étanche étant destinée à accueillir un second fluide, le dispositif d'inspection comportant :
- une première sonde vidéo (12) flexible et de forme allongée, destinée à être insérée dans l'enceinte du générateur de vapeur par une ouverture de celle-ci et conformée pour être déplaçable à travers un orifice de passage de fluide délimité par une plaque entretoise et un tube d'écoulement, la première sonde vidéo (12) comprenant au moins un élément ferromagnétique (15),
- une deuxième sonde (16) flexible et de forme allongée, destinée à être insérée, par une ouverture de l'enceinte du générateur de vapeur, dans un tube d'écoulement, la deuxième sonde comprenant au moins un aimant permanent (17, 18) agencé pour coopérer avec l'au moins un élément ferromagnétique de la première sonde de façon à réaliser un entraînement de la première sonde, le long de la surface extérieure d'un tube d'écoulement, par la deuxième sonde, lorsque la deuxième sonde est insérée dans ledit tube d'écoulement et déplacée dans ce dernier, et lorsque la première sonde est insérée dans l'enceinte du générateur de vapeur et disposée à proximité de la surface extérieure du tube d'écoulement dans lequel est insérée la deuxième sonde.

2. Dispositif d'inspection selon la revendication 1, **caractérisé en ce que** la deuxième sonde (16) comporte, à proximité de son extrémité distale, un aimant permanent (17) présentant au moins une face plane s'étendant selon un angle inférieur à 45° par rapport à la direction générale de la deuxième sonde, et de préférence sensiblement parallèlement à la direction générale de la deuxième sonde, et des moyens d'entraînement en rotation agencés pour entraîner en rotation ledit aimant permanent autour d'un axe sensiblement parallèle à la direction générale de la deuxième sonde.

3. Dispositif d'inspection selon la revendication 2, **caractérisé en ce que** l'aimant permanent (17) présentant au moins une face plane comporte un axe longitudinal s'étendant sensiblement selon la direction générale de la deuxième sonde, et **en ce que** les moyens d'entraînement en rotation sont agencés pour entraîner en rotation ledit aimant permanent autour de son axe longitudinal.

4. Dispositif d'inspection selon l'une des revendications 1 à 3, **caractérisé en ce que** la deuxième sonde (16) comporte une pluralité d'aimants permanents (17, 18) décalés longitudinalement les uns par rapport aux autres, et **en ce que** la première sonde (12) comporte une pluralité d'éléments ferromagnétiques (15) décalés longitudinalement les uns par rapport aux autres, chaque élément ferromagnétique étant agencé pour coopérer par accouplement magnétique avec l'un des aimants permanents de la deuxième sonde.

5. Dispositif d'inspection selon les revendications 2 et 4, **caractérisé en ce que** les aimants permanents (18) distincts de l'aimant permanent (17) présentant au moins une face plane sont sensiblement cylindriques et présentent de préférence une section circulaire.

6. Dispositif d'inspection selon l'une des revendications 1 à 5, **caractérisé en ce que** le ou chaque élément ferromagnétique (15) comporte une bague ferromagnétique montée autour de la surface extérieure de la première sonde (12).

7. Dispositif d'inspection selon l'une des revendications 1 à 6, **caractérisé en ce que** la première sonde (12) comporte des moyens d'éclairage agencés pour éclairer une zone disposée à proximité de l'extrémité distale de la première sonde.

8. Dispositif d'inspection selon l'une des revendications 1 à 7, **caractérisé en ce que** la première sonde (12) est un fibroscope.

9. Dispositif d'inspection selon l'une des revendications 1 à 8, **caractérisé en ce qu'**il comporte des premiers moyens d'insertion et de positionnement de la première sonde (12) à l'intérieur de l'enceinte du générateur de vapeur, comprenant :
- un rail de support destiné à être inséré, par une ouverture de l'enceinte du générateur de vapeur, selon une direction d'insertion sensiblement horizontale entre deux rangées de tubes d'écoulement,
- des moyens de guidage et de maintien destinés à être fixés au niveau de ladite ouverture de l'enceinte et agencés pour guider et maintenir le rail de support suivant la direction d'insertion,
- un chariot monté mobile sur le rail de support et muni d'une tête orientable,
- un tuyau flexible comportant une première portion d'extrémité montée sur la tête orientable du chariot, et une deuxième portion d'extrémité destinée à faire saillie à l'extérieur du générateur de vapeur, la première sonde vidéo étant destinée à être insérée et déplacée à l'intérieur du tuyau flexible,
- des moyens de balayage agencés pour déplacer la tête orientable du chariot selon au moins une première direction transversale à la direction d'insertion, et
- des moyens de déplacement en translation agencés pour déplacer en translation le chariot le long du rail de support.

10. Dispositif d'inspection selon l'une des revendications 1 à 9, **caractérisé en ce qu'**il comprend des moyens d'entraînement de la deuxième sonde (16) agencés pour déplacer la deuxième sonde à l'intérieur d'un tube d'écoulement (6).

## Patentansprüche

1. Vorrichtung zur Inspektion (11) eines Dampfgenerators (1), umfassend einen dichten Behälter (3), der eine Vielzahl von Abflussrohren (6) eines ersten Fluids und mindestens eine Abstandshalterplatte (8) aufnimmt, die zum Halten der Rohre ausgelegt ist und eine Gruppe von Öffnungen (10) zur Durchgang der Rohre aufweist, wobei der dichte Behälter ausgelegt ist, um ein zweites Fluid aufzunehmen, wobei die Inspektionsvorrichtung Folgendes umfasst:
- eine erste flexible und eine verlängerte Form aufweisende Videosonde (12), die ausgelegt ist, um in den Behälter des Dampfgenerators durch eine Öffnung dieses eingeführt zu werden, und gebildet ist, um über eine Fluid-Durchgangsöffnung verschoben zu werden, die von einer Abstandhalterplatte und einem Abflussrohr begrenzt ist, wobei die erste Videosonde (12) mindestens ein ferromagnetisches Element (15) umfasst,
- eine zweite flexible und eine verlängerte Form aufweisende Videosonde (16), die ausgelegt ist, um durch eine Öffnung des Behälters des Dampfgenerators in ein Abflussrohr eingeführt zu werden, wobei die zweite Sonde mindestens einen Dauermagneten (17, 18) umfasst, der angeordnet ist, um mit dem mindestens einen ferromagnetischen Element der ersten Sonde zusammenzuarbeiten, um einen Antrieb der ersten Sonde entlang der äußeren Fläche eines Abflussrohrs durch die zweite Sonde durchzuführen, wenn die zweite Sonde in das Abflussrohr eingeführt und in diesem verschoben wird, und wenn die erste Sonde in den Behälter des Dampfgenerators eingeführt und in der Nähe der äußeren Fläche des Abflussrohrs angeordnet ist, in das die zweite Sonde eingeführt ist.

2. Inspektionsvorrichtung nach Anspruch 1, **dadurch gekennzeichnet, dass** die zweite Sonde (16) in der Nähe ihres distalen Endes einen Dauermagneten (17) umfasst, der mindestens eine ebene Fläche aufweist, der sich in einem Winkel von weniger als 45° mit Bezug auf die allgemeine Richtung der zweiten Sonde erstreckt, und vorzugsweise im Wesentlichen parallel zur allgemeinen Richtung der zweiten Sonde, und Mittel, um den Dauermagneten in Drehung zu versetzen, die angeordnet sind, um den Dauermagneten um eine Achse in Drehung zu versetzen, die im Wesentlichen parallel zur allgemeinen Richtung der zweiten Sonde ist.

3. Inspektionsvorrichtung nach Anspruch 2, **dadurch gekennzeichnet, dass** der Dauermagnet (17), der mindestens eine ebene Fläche aufweist, eine Längsachse umfasst, die sich im Wesentlichen entlang der allgemeinen Richtung der zweiten Sonde erstreckt, und dadurch, dass die Mittel, um in Drehung zu versetzen, angeordnet sind, um den Dauermagneten um seine Längsachse in Drehung zu versetzen.

4. Inspektionsvorrichtung nach einem der Ansprüche 1 bis 3, **dadurch gekennzeichnet, dass** die zweite Sonde (16) eine Vielzahl von Dauermagneten (17, 18) umfasst, die in der Längsrichtung mit Bezug aufeinander versetzt sind, und dadurch, dass die erste Sonde (12) eine Vielzahl von ferromagnetischen Elementen (15) umfasst, die in der Längsrichtung mit Bezug aufeinander versetzt sind, wobei jedes ferromagnetische Element angeordnet ist, um durch eine magnetische Kopplung mit einem der Dauermagneten der zweiten Sonde zusammenzuarbeiten.

5. Inspektionsvorrichtung nach einem der Ansprüche 2 und 4, **dadurch gekennzeichnet, dass** die Dauermagneten (18), die vom Dauermagneten (17) verschieden sind, der mindestens eine ebene Fläche aufweist, im Wesentlichen zylindrisch sind und vorzugsweise einen kreisförmigen Abschnitt aufweisen.

6. Inspektionsvorrichtung nach einem der Ansprüche 1 bis 5, **dadurch gekennzeichnet, dass** das oder jedes ferromagnetische Element (15) einen ferromagnetischen Ring umfasst, der um die äußere Fläche der ersten Sonde (12) montiert ist.

7. Inspektionsvorrichtung nach einem der Ansprüche 1 bis 6, **dadurch gekennzeichnet, dass** die erste Sonde (12) Beleuchtungsmittel umfasst, die angeordnet sind, um einen Bereich zu erleuchten, der sich in der Nähe des distalen Endes der ersten Sonde befindet.

8. Inspektionsvorrichtung nach einem der Ansprüche 1 bis 7, **dadurch gekennzeichnet, dass** die erste Sonde (12) ein Fibroskop ist.

9. Inspektionsvorrichtung nach einem der Ansprüche 1 bis 8, **dadurch gekennzeichnet, dass** sie erste Mittel zur Einführung und Positionierung der ersten Sonde (12) in das Innere des Behälters des Dampfgenerators aufweist, umfassend:
- eine Trageschiene, die ausgelegt ist, um durch eine Öffnung des Behälters des Dampfgenerators gemäß einer Einführungsrichtung eingeführt zu werden, die im Wesentlichen horizontal zwischen zwei Reihen von Abflussrohren ist,
- Mittel zur Führung und zum Halten, die ausgelegt sind, um auf der Ebene der Öffnung des Behälters befestigt zu sein und angeordnet sind, um die Trageschiene gemäß der Einführungsrichtung zu führen und zu halten,
- einen Wagen, der beweglich auf der Trageschiene montiert und mit einem ausrichtbaren Kopf ausgestattet ist,
- ein flexibles Rohr, das einen ersten Endabschnitt umfasst, der auf dem ausrichtbaren Kopf des Wagens montiert ist, und einen zweiten Endabschnitt, der ausgelegt ist, um an der Außenseite des Dampfgenerators hervorzuspringen, wobei die erste Videosonde ausgelegt ist, um in das Innere des flexiblen Rohr eingeführt und verschoben zu werden,
- Spülmittel, die angeordnet sind, um den ausrichtbaren Kopf des Wagens gemäß mindestens einer ersten Querrichtung zur Einführungsrichtung zu verschieben, und
- Mittel zur Verschiebung in Translation, die angeordnet sind, um den Wagen in Translation entlang der Trageschiene zu verschieben.

10. Inspektionsvorrichtung nach einem der Ansprüche 1 bis 9, **dadurch gekennzeichnet, dass** sie Mittel zum Antrieb der zweiten Sonde (16) umfasst, die angeordnet sind, um die zweite Sonde in das Innere eines Abflussrohrs (6) zu verschieben.

## Claims

1. An inspection device (11) of a steam generator (1) comprising a sealed enclosure (3) housing a plurality of flowing tubes (6) for a first fluid and at least one spacer plate (8) intended for the maintaining of the tubes and having a set of openings (10) for the passage of tubes, the sealed enclosure being intended to house a second fluid, the inspection device including:
- a first video probe (12) flexible and with an elongated shape, intended to be inserted in the enclosure of the steam generator by an opening thereof and shaped to be displaceable through a fluid passage port delimited by a spacer plate and a flowing tube, the first video probe (12) comprising at least a ferromagnetic element (15),
- a second probe (16) flexible and with an elongated shape, intended to be inserted, through an opening of the enclosure of the steam generator, inside a flowing tube, the second probe comprising at least a permanent magnet (17, 18) arranged to cooperate with at least one ferromagnetic element of the first probe in such a way to perform a driving of the first probe, along the outer surface of a flowing tube, by the second probe, when the second probe is inserted in said flowing tube and displaced inside the latter, and when the first probe is inserted in the enclosure of the steam generator and disposed close to the outer surface of the flowing tube in which the second probe is inserted.

2. The inspection device according to claim 1, **characterized in that** the second probe (16) includes, close to its distal end, a permanent magnet (17) having at least one flat face extending according to an angle lower than 45° relative to the general direction of the second probe, and preferably substantially parallel to the general direction of the second probe, and rotatably driving means arranged to drive in rotation said permanent magnet about an axis substantially parallel to the general direction of the second probe.

3. The inspection device according to claim 2, **characterized in that** the permanent magnet (17) having at least one flat face includes a longitudinal axis extending substantially according to the general direction of the second probe, and **in that** the rotatably driving means are arranged to drive in rotation said permanent magnet about its longitudinal axis.

4. The inspection device according to any of claims 1 to 3, **characterized in that** the second probe (16) includes a plurality of permanent magnets (17, 18) longitudinally offset relative to each other, and **in that** the first probe (12) includes a plurality of ferromagnetic elements (15) longitudinally offset relative to each other, each ferromagnetic element being arranged to cooperate by magnetic coupling with one of the permanent magnets of the second probe.

5. The inspection device according to claims 2 and 4, **characterized in that** the permanent magnets (18) distinct from the permanent magnet (17) having at least a flat face are substantially cylindrical and present preferably a circular section.

6. The inspection device according to any of claims 1 to 5, **characterized in that** the or each ferromagnetic element (15) includes a ferromagnetic ring mounted around the outer surface of the first probe (12).

7. The inspection device according to any of claims 1 to 6, **characterized in that** the first probe (12) includes lighting means arranged for lighting an area disposed close to the distal end of the first probe.

8. The inspection device according to any of claims 1 to 7, **characterized in that** the first probe (12) is a fiberscope.

9. The inspection device according to any of claims 1 to 8, **characterized in that** it includes first means for inserting and positioning the first probe (12) inside the enclosure of the steam generator, comprising :
- a support rail intended to be inserted, by an opening of the enclosure of the steam generator, along a substantially horizontal inserting direction between two rows of flowing tubes,
- guiding and maintaining means intended to be fixed at said opening of the enclosure and arranged to guide and maintain the support rail according to the inserting direction,
- a carriage movably mounted on the support rail and equipped with an adjustable head,
- a flexible pipe including a first end portion mounted on the adjustable head of the carriage, and a second end portion intended to protrude outside the steam generator, the first video probe being intended to be inserted and displaced inside the flexible pipe,
- scanning means arranged to displace the adjustable head of the carriage according to at least a first direction transversal to the inserting direction, and
- translatory displacing means arranged to displace in translation the carriage along the support rail.

10. The inspection device according to any of claims 1 to 9, **characterized in that** it comprises means for driving the second probe (16) arranged to displace the second probe inside a flowing tube (6).
